Europäisches Patentamt

European Patent Office

Office européen des brevets

(19)

(11) Veröffentlichungsnummer: **0 018 017**
**B1**

(12) **EUROPÄISCHE PATENTSCHRIFT**

(45) Veröffentlichungstag der Patentschrift:
18.07.84

(21) Anmeldenummer: **80102212.0**

(22) Anmeldetag: **24.04.80**

(51) Int. Cl.³: **F 16 L 21/02, C 03 B 23/09**

(54) **Verbindung zum abgedichteten Ineinanderfügen von Enden zylindrischer Glasrohre.**

(30) Priorität: **24.04.79 HU MA003138**

(43) Veröffentlichungstag der Anmeldung:
**29.10.80 Patentblatt 80/22**

(45) Bekanntmachung des Hinweises auf die Patenterteilung:
**18.07.84 Patentblatt 84/29**

(84) Benannte Vertragsstaaten:
**AT DE FR GB IT**

(56) Entgegenhaltungen:
**DE - A - 1 750 930**
**DE - B - 1 268 325**
**DE - U - 1 940 770**
**DE - U - 1 944 584**
**GB - A - 1 220 676**
**US - A - 3 588 132**
**US - A - 3 656 784**

(73) Patentinhaber: **Magyar Tudomanyos Akademia Kutatasi Eszközöket Kivitelezö Vallalata, Komocsy ut 29-31, Budapest XIV (HU)**

(72) Erfinder: **Peczely, Antal, Pozsonyi u. 2/b, Budapest IV (HU)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

## Beschreibung

Die Erfindung bezieht sich auf eine Verbindung zum abgedichteten Ineinanderfügen von Enden zylindrischer Glasrohre, bei der am Ende des einen Glasrohres ein das Ende des anderen Glasrohres aufnehmendes, von einer Verengung begrenztes rotationssymmetrisch ausgebildetes muffenförmiges Aufnahmeteil ausgebildet ist und bei der die auf den Aufnahmeteil des aufnehmenden Glasrohres entfallende Mantelfläche des aufgenommenen Glasrohres einen rundumlaufenden, axial beidseitig begrenzten Sitz aufweist, in dem eine sich an die Innenfläche des Rohrendes des aufnehmenden Glasrohres anpassende, aus einem elastischen Material, vorzugsweise aus Teflon, hergestellte Dichtung angeordnet ist, so daß zwischen der Innenfläche der Dichtung und der Fläche des Sitzes sowie der Außenfläche der Dichtung und der Innenfläche des aufnehmenden Glasrohres ein vakuumdichter Stoß ausgebildet ist, bei der ferner auf dem aufgenommenen Glasrohr ein aus gegenüber Chemikalien beständigem Stoff hergestellter zusätzlicher Ring sitzt, der vorzugsweise aus Silikongummi oder Halogen-Butyl-Kautschuk besteht, der sich an die Innenfläche des ersten Rohrendes anpaßt und bei der die Fläche des Sitzes sowie die Innenfläche des Aufnahmeteils des aufnehmenden Glasrohres ungeschliffen ist (DE-U-1 944 584).

Die erfindungsgemäße Verbindung kann insbesondere in mit Chemikalien arbeitenden Laboratorien verwendet werden, wo die Glasgegenstände infolge ihrer guten Beständigkeit gegenüber Chemikalien gern gebraucht werden.

Die in ein Glasrohr endenden Anschlüsse von Laborgeräten müssen so ineinandergefügt werden, daß auch die Stoßstellen gegenüber den Chemikalien und deren Dämpfen beständig sind und in gewissen Fällen einen Vakuumverschluß ermöglichen.

Heutzutage besteht die Forderung nach einer Verbindung zum Ineinanderfügen von Glasrohren, welche im Gegensatz zu in Laboratorien üblichen Rohranschlüssen weder ineinander passende geschliffene Glasflächen noch zwischen den Glasflächen üblicherweise vorhandenes Schmiermittel, das eine Verunreinigungsquelle darstellt, aufweist. Diese Forderung ist auf die Tatsache zurückzuführen, daß die Herstellung der ineinander passenden Glasflächen arbeitsaufwendig ist sowie die erforderlichen Werkzeuge kompliziert und nur zur Herstellung kleiner Serien geeignet sind.

Es sind Verbindungen zum abgedichteten Ineinanderfügen der Enden von zylindrischen Glasrohren bekannt, bei denen die Enden der beiden anzuschließenden Glasrohre derart ineinandergefügt werden, daß an den Enden beider Glasrohre je ein Gewinde durch Pressen ausgebildet wird und auf das Gewindeende des aufnehmenden Glasrohrs ein Verschlußelement aufgeschraubt wird. Das hineinreichende Glasrohr paßt sich in das in der Mitte des Verschlußelements vorhandene Gewinde ein, wonach mit dem Verschlußelement eine Abdichtung an das Ende des aufnehmenden Rohrs angepreßt wird. In der Mitte der Abdichtung ist eine Öffnung ausgebildet, wobei das hineinragende Glasrohr die Öffnung durchquert. Bei dieser Verbindung sind das Verschlußelement und die Abdichtung aus gegenüber Chemikalien beständigen Stoffen, wie z. B. Silikon (Verschlußelement) und Teflon (Abdichtung) hergestellt.

Der Nachteil dieser Verbindung besteht darin, daß die Montage mit Schwierigkeiten verbunden ist, da die Gewinde ineinandergefügt werden müssen. Überdies muß die Verbindung während der Reinigung vollkommen zerlegt werden. Derartige Verbindungen haben sich nur an gewissen Stellen verbreitet, z. B. bei Kapillar- oder Thermometereinführungen.

Voraussetzung für die Verwirklichung einer vakuumdichten Verbindung ist eine äußerst präzise zylindrische Gestaltung der Stoßflächen. Zu diesem Zweck wurde das Glas meistens geschliffen, die Nachteile dieses Verfahrens sind bekannt.

Bei der Ausführung gemäß der DE-U-1 944 584 muß nachteiligerweise die Außenfläche der Dichtung geschliffen sein. Außerdem wird es gemäß diesem Stand der Technik für erforderlich gehalten, die beiden ineinandergesteckten Glasrohre in diesem Bereich konisch zu gestalten, was eine komplizierte Gestaltung der Glasrohre an den aneinandergesteckten Enden voraussetzt.

Aus der DE-A-1 750 930 ist eine abgedichtete Verbindung zwischen Abflußrohren und dergleichen für Abwässer oder dergleichen aus Gußeisen bzw. Keramik oder Kunststoffen bekannt. Bei diesen Abflußrohren wird mit einer Fertigungstoleranz von 3 mm gearbeitet, was im krassen Gegensatz zum Gegenstand der Erfindung steht, wo mit viel kleineren Toleranzen gefertigt wird. Gemäß diesem Stand der Technik soll eine Gummidichtung für Abflußrohre und dergleichen geschaffen werden, welche von Hand leicht eingesetzt werden kann und auch bei extrem ungünstigen Toleranzen der Rohre eine dichte Passung gewährleistet, so daß ein Durchsickern durch die Verbindung verhindert wird. Eine vakuumdichte Verbindung wird nicht angestrebt. Es ist jedoch gemäß dieser Druckschrift die Maßnahme verwirklicht, die Dichtung zur Abdichtung der beiden Rohrenden an der Verengung des muffenartigen Endes des Außenrohres anstoßen zu lassen.

Es ist weiterhin bekannt, mit Bohrungen versehene Stopfen in die Öffnung von Reagenzgläser zu stecken, um z. B. ein Röhrchen darin zu befestigen.

Der Erfindung liegt die Aufgabe zugrunde, eine preiswert und schnell herzustellende Rohrverbindung zu schaffen, die keine geschliffenen Glasflächen und auch nicht die Anwendung eines Schmiermittels erfordert.

Diese Aufgabe wird erfindungsgemäß dadurch gelöst, daß sowohl das Aufnahmeteil des aufnehmenden Glasrohres als auch das Ende des aufgenommenen Glasrohres zylinderförmig sind, daß im eingefügten Zustand des Glasrohres die Dichtung mit ihrer dem aufnehmenden Glasrohr zugewandten umlaufenden Außenkante an die Verengung stößt und daß der zusätzliche Ring auf die zylindrische Außenfläche des aufgenommenen Glasrohres aufgeschoben ist und die Enden der beiden Glasrohre haltend an der Endfläche des aufnehmenden Rohres stopfenartig anliegt.

Die Erfindung wird in der Maßnahme gesehen, die Rohrverbindung zu verbilligen, indem im eingefügten Zustand des Glasrohres die Dichtung mit ihrer dem aufnehmenden Glasrohr zugewandten umlaufenden Außenkante an die Verengung stößt. Durch die erfindungsgemäße Merkmalskombination wird auf besonders einfache Weise bewirkt, daß einerseits die Glasrohre im Verbindungsabschnitt durch die zylindrische Form und durch den einzigen Dichtungssitz einfach ausgestaltet und somit einfach herzustellen ist und trotzdem ohne jegliches Schleifen der Oberflächen eine vakuumdichte Verbindung hergestellt werden kann. Dabei ist die Außenfläche der Dichtung ungeschliffen.

Bei der erfindungsgemäßen Verbindung ermöglichen die mit höchster Genauigkeit bearbeiteten, zylindrischen, glatten Glasflächen zusammen mit der elastischen und dicht eingepaßten Abdichtung ein leichtes Montieren und vakuumdichtes Ineinanderfügen.

Infolge der präzisen Bearbeitung des Glasrohrs müssen die Abmessungen der elastischen Abdichtung nicht wesentlich größer gewählt werden als die Abmessungen der Glasrohre, wodurch die Anpassung eine wesentlich geringere Kraftausübung beansprucht und die Bruchgefahr bedeutend herabgesetzt wird, was wiederum, mit der Lebensdauer von mit geschliffenen Glasflächen ausgestalteten Verbindungen verglichen, zu einer wesentlich längeren Lebensdauer der aus Glas hergestellten Elemente der Verbindung führt.

Die erfindungsgemäße Verbindung sowie das zur genauen Bearbeitung der Endteile der Glasrohre dienende Verfahren ist im folgenden an Ausführungsbeispielen anhand der Zeichnungen näher erläutert. In den Zeichnungen zeigt

Fig. 1 einen Längsschnitt eines ersten Ausführungsbeispiels der erfindungsgemäßen Verbindung,

Fig. 2 einen Längsschnitt eines zweiten Ausführungsbeispiels der erfindungsgemäßen Verbindung,

Fig. 3 eine Darstellung zur Erläuterung eines Verfahrens zur genauen Bearbeitung des Endteils eines Glasrohrs für die Gestaltung der erfindungsgemäßen Verbindung,

Fig. 4 einen Schnitt entlang der Ebene IV-IV in Fig. 3, und

Fig. 5 ein weiteres Beispiel zur Durchführung des Verfahrens.

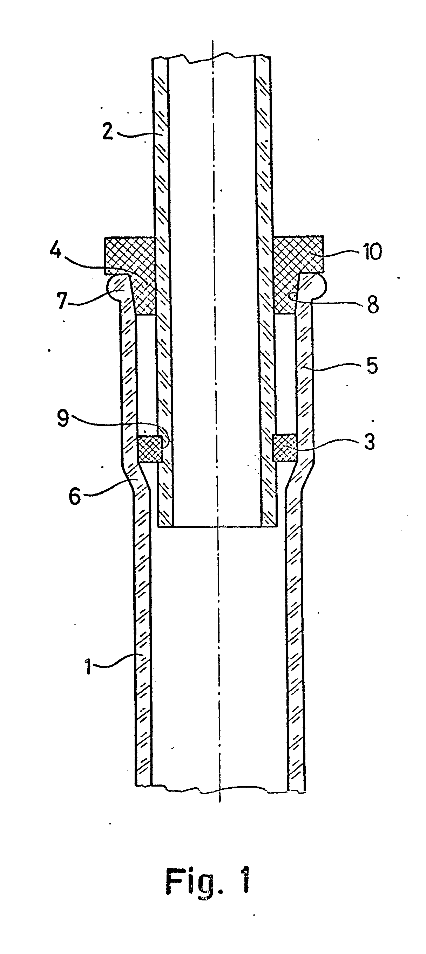

In Fig. 1 ist ein erstes Ausführungsbeispiel einer erfindungsgemäßen Verbindung dargestellt, die zwischen Glasrohren 1 und 2 einen vakuumdichten, gegenüber Chemikalien beständigen Anschluß sicherstellt. Das Glasrohr 1 weist einen erweiterten Teil 5 auf, welcher von einer Verengung 6 begrenzt ist und am äußeren Ende mit einem Flansch 7 versehen ist. Das Glasrohr 2 ragt in den erweiterten Teil 5 hinein und kann eventuell über die Verengung 6 hinausragen. Der vakuumdichte Verschluß der Verbindung wird durch eine in den zylinderringförmigen Raumteil zwischen dem erweiterten Teil 5 das Glasrohrs 1 und dem hineinragenden Ende des Glasrohrs 2 angeordnete Abdichtung 3 gewährleistet. Der Grundstoff der Abdichtung 3 ist Teflon, so daß diese gegenüber Chemikalien beständig und elastisch ist.

Die Innenfläche des erweiterten Teils 5 des Glasrohrs 1 muß in zylindrischer Form mit äußerst genauer Toleranz ausgestaltet werden, damit sich die Abdichtung 3 in der vollen Länge des erweiterten Teils 5 an jeder Stelle dicht an das glatte, ungeschliffene Glas anpassen kann. Die Abdichtung 3 ist in einem ringförmigen, am Ende des Glasrohrs 2 ausgebildeten, rundumlaufenden Sitz 9 angeordnet. Der Außendurchmesser des Endes des Glasrohrs 2 ist leicht verjüngt, so daß die Abdichtung 3 leicht auf das Glasrohr 2 aufgeschoben und in den Sitz 9 am Ende einfach eingeschnappt werden kann. Beim Schließen der Verbindung, nachdem das mit der Abdichtung 3 versehene Glasrohr 2 in den Teil 5 des Glasrohrs 1 eingeschoben worden ist, bleibt die Abdichtung 3 in der Verengung des Glasrohrs 1 stecken, wodurch die axiale Bewegung des Glasrohrs 2 begrenzt wird. Die radiale Bewegung des Glasrohrs 2 wird so verhindert, und gleichzeitig wird die zentrische Lage gegenüber dem Glasrohr 1 dadurch stabilisiert, daß zwischen das Glasrohr 1 und das Glasrohr 2 ein Haltering 4 eingesetzt wird, der auf das Glasrohr 2 aufgeschoben ist und in das Glasrohr 1 hineinragt. Zwecks Erleichterung der Mitnahme des Halterings 4 ist an dem Ende des erweiterten Teils 5 des Glasrohrs 1 ein konischer Abschnitt 8 ausgestaltet, der sich in Richtung des Endes des Glasrohrs 1 erweitert. Der Haltering 4 ist gleicherweise aus einem elastischen und gegenüber Chemikalien beständigen Material hergestellt, zweckmäßig aus Silikongummi oder Halogen-Butyl-Kautschuk. Der Haltering 4 kann einfach zylinderringförmig sein, ist jedoch vorteilhaft mit einer Schulter 10, wie es aus der Fig. 1 ersichtlich ist, versehen, die am Ende des Glasrohrs 1 auf dem Flansch 7 aufliegt.

Die in Fig. 1 dargestellte Verbindung kann beispielsweise mit den folgenden Abmessungen realisiert werden. Die Gesamtlänge des erweiterten Teils 5 des Glasrohrs 1 beträgt 18 mm, davon ist der konische Abschnitt 8 6 mm lang, bei einem Verhältnis der Konizität von 1 : 10. Wird der Innendurchmesser des zylindrischen Teils des erweiterten Teils 5 auf 15 mm dimensioniert, so beträgt der Durchmesser des konischen Abschnitts 8 15,6 mm. Die Dicke des Flansches 7 ist gleich der Länge des kegeligen Abschnitts 8 und beträgt 6 mm. Der Außendurchmesser des Glasrohrs 2 beträgt 13 mm, die Tiefe des am Ende ausgestalteten Sitzes 9 0,5 mm, während die Breite 3 mm beträgt. Der ganze Haltering 4 ist 10 mm lang, daraus entfallen auf die Schulter 10 4 mm; deren Außendurchmesser ist gleich 20 mm, der Durchmesser des in das Glasrohr 1 hineinragenden 6 mm langen Teils ändert sich im Bereich zwischen 15,1 und 15,6 mm. Der Bohrungsdurchmesser des Halterings 4 liegt zwischen 12,3 und 12,7 mm. Der Außendurchmesser der Abdichtung 3 beträgt 15,1 mm, der Innendurchmesser 11,9 mm und die Dicke 2,7 mm. Wie es aus den Abmessungen ersichtlich ist, ist der Stoß zwischen dem äußeren Mantel der Abdichtung 3 und der inneren, ungeschliffenen Fläche des erweiterten Teils 5 des Glasrohrs 1 sowie der inneren Mantelfläche der Abdichtung 3 und dem Bodenteil des Sitzes 9 recht eng, wodurch die Bedingung eines vakuumdichten Stoßes erfüllt ist.

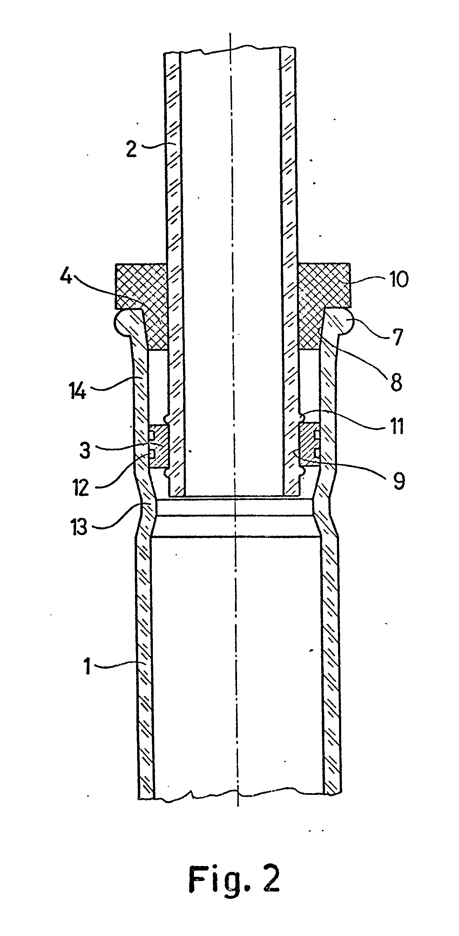

In Fig. 2 ist ein weiteres Ausführungsbeispiel der erfindungsgemäßen Verbindung dargestellt. Die hier dargestellte Verbindung weicht von der in Fig. 1 gezeigten Verbindung nur in gewissen Gestaltungen ab, im wesentlichen ist sie jedoch aus identischen Bestandteilen und auf die gleiche Weise ausgestaltet. Die Form des Glasrohrs 1 weicht insofern von der in Fig. 1 dargestellten Ausführungsform ab, daß das Glasrohr 1 von einem zylindrischen Glasrohr gebildet ist, das im wesentlichen in der gesamten Länge den gleichen Durchmesser aufweist und mit einer Verengung 13 ausgebildet ist. Zwischen der Verengung 13 und dem mit dem Flansch versehenen Ende des Glasrohrs 1 ist ein Aufnahmeteil 14 vorgesehen, dessen Innenfläche durch eine ungeschliffene, mit höchster Genauigkeit ausgestaltete zylindrische Fläche gebildet ist. Das Ende des mit der Abdichtung 3 versehenen Glasrohrs 2 reicht in den Aufnahmeteil 14 hinein. In diesem Fall kann die Abdichtung 3 höchstens bis zur Verengung 13 eingeschoben werden. Am Ende des Glasrohrs 2 ist auch hier der Sitz 9 zur Aufnahme der Abdichtung 3 ausgebildet, der aber nicht in die Wand des Glasrohrs 2 eingelassen ist, sondern von zwei rund um die Wand des Glasrohrs 2 laufenden Wülsten 11 begrenzt ist. Diese Formgebung ist als vorteilhafter zu betrachten als der nutenförmige Sitz, da die Wand des Glasrohrs 2 an dieser Stelle nicht dünner wird und dadurch weniger zum Bruch neigt. Der letzte Unterschied besteht in der Gestaltung der Abdichtung 3. In deren Außenmantel sind zwei rundumlaufende Vertiefungen 12 vorgesehen, deren Zahl auch mehr oder weniger sein kann. Die Vertiefungen 12 haben die Aufgabe, die Elastizität der Abdichtung 3 und dadurch die Genauigkeit der Anpassung an das Glasrohr 1 zu erhöhen, ues weiteren die Einführung der Abdichtung 3 zu erleichtern. Die zentrische Lage der Glasrohre 1 und 2 wird auf mit der Fig. 1 übereinstimmende Art und Weise mit dem Haltering 4 stabilisiert.

Im folgenden ist das bei der erfindungsgemäßen Verbindung vorteilhaft anwendbare, sich auf die genaue Bearbeitung der Enden der Glasrohre beziehende Verfahren erläutert.

Bei diesem Verfahren wird ein Dorn verwendet, der aus einem bei der Erweichungstemperatur des Glases seinen festen Zustand und seine Maßgenauigkeit behaltenden Material hergestellt ist, und der dem Innenmaß des zu bearbeitenden Glasrohrs entsprechend mit Präzisionsbearbeitung ausgeführt ist. In der ersten Arbeitsphase wird der Dorn bei einer Temperatur von etwa 300° C (im Temperaturbereich zwischen 250 und 350° C) vorgewärmt. Das zylindrische Glasrohr, dessen Innendurchmesser um 1,0 bis 1,5 mm größer ist als der umfaßte Durchmesser des Dorns, wird auf den Dorn aufgeschoben. Der zu bearbeitende Abschnitt des Glasrohrs wird bis zur Erweichung (etwa 700° C) erhitzt, wonach das weich gewordene Glas unter Anwendung einer konzentrischen Preßkraft an den Dorn angepreßt und gleichzeitig die Wärmezufuhr eingestellt wird. Zuletzt wird das abgekühlte und erstarrte Glasrohr vom Dorn abgezogen.

Der Grundstoff des der Form des zu bearbeitenden Glasrohrs entsprechend gestalteten Dorns muß bei der Erweichungstemperatur des Glases seinen festen Zustand und seine Maßgenauigkeit bewahren, die Wärmedehnungszahl muß derjenigen des Glases ähnlich sein; ein solcher Grundstoff ist z. B. der Stahl der Qualität H9.

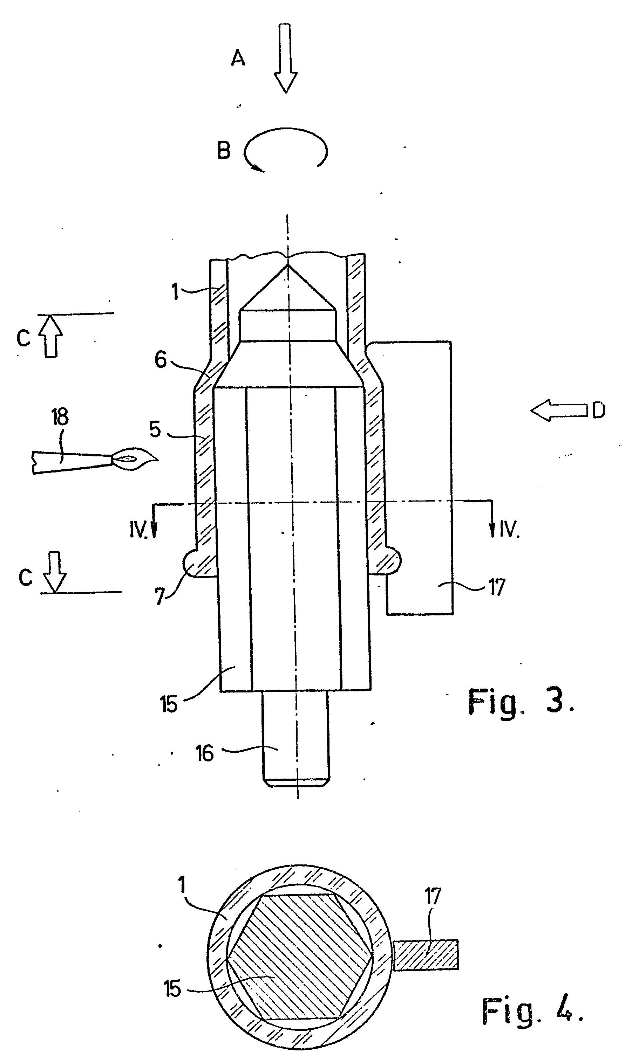

In Fig. 3 ist diejenige Phase dieses Verfahrens dargestellt, in der das Glasrohr auf den vorgewärmten Dorn bereits aufgeschoben worden ist und das Glasrohr unter Anwendung einer konzentrischen Preßkraft an den Dorn gepreßt wird.

Im Hinblick darauf, daß das in Fig. 3 dargestellte Glasrohr dem Glasrohr 1 der erfindungsgemäßen, in Fig. 1 veranschaulichten Verbindung entspricht, sind auch die Bezugszeichen gleich. Der Dorn 15 ist mit einem zum Einspannen geeigneten Ansatz 16 versehen, wobei der dem zu bearbeitenden, erweiterten Teil 5 des Glasrohrs 1 entsprechende Teil einen hexagonalen Querschnitt aufweist (Fig. 4). Der zu bearbeitende Teil des Glasrohrs 1 wird in dem hier beschriebenen Fall mit einem Brenner 18 erhitzt, der zwischen den durch die Pfeile C angedeuteten Grenzen in Richtung der Pfeile C bewegt wird. Die Preßkraft wird derart erzeugt, daß auf das Glasrohr 1 von außen her ein sich dem gewünschten Außenprofil des Glasrohrs 1 anpassendes Werkzeug 17 gepreßt wird. Die Konzentrizität der Preßkraft wird dadurch erreicht, daß das Glasrohr 1 rund um den stationären Dorn 15 gedreht wird, wodurch auch der Brenner 18 das Glasrohr 1 konzentrisch erhitzt. Wird ein Dorn mit einem regulär-polygonalen Querschnitt (im Beispiel mit einem hexagonalen Querschnitt) verwendet, so wird das aufgeschobene Glasrohr zweckmäßig mit einer Umdrehungszahl von 30 U/min gedreht. Beim Ausüben der Preßkraft wird die Umdrehungsgeschwindigkeit vorteilhaft auf das 4 bis 5fache erhöht.

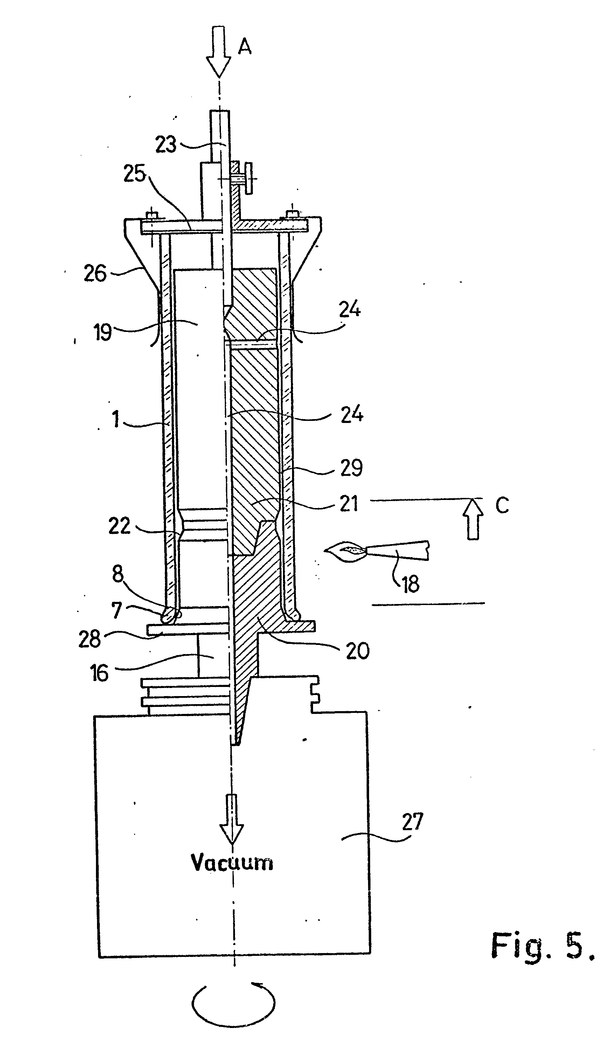

In Fig. 5 ist die genaue Bearbeitung des Endteils des in Fig. 2 dargestellten Glasrohrs 1 veranschaulicht. Bei diesem Verfahren wird ein der gewünschten Form des Glasrohrs 1 entsprechend ausgestalteter Dorn 19, der die Form eines Drehkörpers aufweist, verwendet, der Dorn ist mit einer der Verengung 13 des Glasrohrs 1 entsprechenden Vertiefung 22 versehen. Um am Ende des Prozesses den Dorn 19 leicht aus dem Glasrohr 1 entfernen zu können, wird ein aus mehreren Teilen bestehender Dorn verwendet; diese Teile — Dornunterteil 20 und Dornoberteile 21 — sind entlang der Vertiefung 22 einander angepaßt.

Im Gegensatz zu dem vorher beschriebenen Verfahren wird die konzentrisch wirkende Preßkraft nicht von außen her unter Zuhilfenahme eines an die Wand des Glasrohrs gepreßten Werkzeugs erzeugt, sondern so, daß das Glasrohr 1 mit Hilfe eines in dem zylindermantelförmigen Raumteil 29 zwischen dem Glasrohr 1 und dem Dorn 19 aus der dem zu bearbeitenden Ende entgegengesetzten Richtung erzeugten Vakuums auf den Dorn 19 gezogen wird. Zweckmäßig wird daher im Innern des Dorns 19 ein Kanal 24 ausgebildet, dessen eine Öffnung an eine Pumpe 27 angeschlossen ist, während die andere Öffnung in den Seitenmantel des Dornoberteils 21 über dem zu bearbeitenden Abschnitt des Glasrohrs 1 einmündet. Am Dornunterteil 20 ist eine Schulter 28 ausgebildet. Das in der Richtung des zu bearbeitenden Teils liegende Ende des Glasrohrs 1 liegt auf der erwähnten Schulter 28 auf, das entgegengesetzte Ende wird mit einem Verschlußelement 25 vakuumdicht abgeschlossen, wobei das Glasrohr 1 mit Hilfe von Federn 26 und eines Zapfens 23 an die Schulter 28 gepreßt wird.

Im Laufe des in Fig. 5 veranschaulichten Verfahrens wird das auf den vorgewärmten Dorn aufgeschobene und vakuumdicht abgeschlossene Glasrohr 1 mit dem Brenner 18 bis zur Erweichung erhitzt, wonach mit der Pumpe 27 über den Kanal 24 ein Unterdruck im Raumteil 29 erzeugt wird. Gleichzeitig wird die Wärmezufuhr durch Löschen des Brenners 18 abgestellt. Hierdurch preßt sich die Wand des Glasrohrs 1 von der Schulter 28 ausgehend an den Dorn 19 an und nimmt dessen Form an. Nachdem sich das Glasrohr 1 entlang des Aufnahmeteils 14 und der Vertiefung 12 auf den Dorn 19 gepreßt hat, erstarrt und mit dem Dorn zusammen abgekühlt ist, wird das Verschlußelement 25 entfernt, der Dornoberteil 21 aus dem Glasrohr 1 herausgezogen und das Glasrohr 1 von dem Dornunterteil 20 abgehoben.

Die einzelnen Verfahrensschritte beschränken sich nicht auf die hier geschilderten Beispiele. So kann z. B. das in Fig. 2 dargestellte Glasrohr 1 unter Verwendung des Verfahrens nach Fig. 3 und umgekehrt hergestellt werden.

Auch die Wärmezufuhr kann abweichend erfolgen, so z. B. unter Zuhilfenahme eines konzentrisch ausgestalteten Brenners oder auf andere Art und Weise.

Die Gestaltung der erfindungsgemäßen Verbindung ist einfach und kann in Großbetrieben durchgeführt werden; besondere Fachkenntnisse sind nicht erforderlich. Infolge der einfachen Formen und glatten Flächen ist das Schließen und Lösen der Verbindung sowie die Reinigung einfach geworden. Die Verbindung kann vorteilhaft in chemischen Laboratorien verwendet werden, da im Bedarfsfall schnell zerlegt werden kann. Die Verbindung ist beständig gegenüber Chemikalien und stellt einen vakuumdichten Anschluß zwischen den Enden der Glasrohre sicher.

Bei Anwendung des vorgenannten Verfahrens können die Enden der Glasrohre mit einer Genauigkeit bearbeitet werden, die bisher nur gefordert worden ist, aber ohne Abschliff nicht realisiert werden konnte.

Kurz umrissen umfaßt die Erfindung eine Verbindung zum abgedichteten Ineinanderfügen von Enden zylindrischer Glasrohre sowie ein Verfahren zur genauen Bearbeitung der Endteile der Glasrohre.

Bei der erfindungsgemäßen Verbindung ist am Ende des einen Glasrohrs in dem das zylindrische Ende des anderen Glasrohrs aufnehmenden, mit einer zylindrischen Innenfläche ausgebildeten, erweiterten zylinderringförmigen Teil eine gegenüber Chemikalien beständige Abdichtung angeordnet. Die Abdichtung ist in dem auf den erweiterten Teil entfallenden Mantel des hineinragenden Glasrohrs ausgebildeten Sitz angeordnet, wobei zwischen der Abdichtung und dem ungeschliffenen Bodenteil des auf dem hineinragenden Glasrohr ausgestalteten Sitzes sowie der ungeschliffenen Innenfläche des aufnehmenden zylindrischen Glasrohrs und der Abdichtung ein dichter Stoß vorgesehen ist.

Mit Hilfe des vorgenannten Verfahrens wird der Innendurchmesser der Glasrohre mit äußerst genauer Toleranz ausgebildet, wodurch das Verfahren vorteilhaft zur Herstellung der erfindungsgemäßen Verbindung verwendet werden kann.

Bei dem genannten Verfahren wird ein aus einem geeigneten wärmebeständigen Stoff hergestellter Dorn angewendet, der die gewünschte Form der Glasrohre gewährleistet. Der Dorn wird durch Wärmezufuhr von außen her erhitzt, das Glasrohr, dessen Innendurchmesser den umfaßten Durchmesser des Dorns um 1,0 bis 1,5 mm übertrifft, wird auf den Dorn aufgeschoben, wonach der zu bearbeitende Teil des Glasrohrs bis zur Erweichung erhitzt wird. Das weich gewordene Glasrohr wird mit Hilfe einer äußeren Preßkraft an den Dorn gepreßt, die Wärmezufuhr abgestellt und zuletzt das abgekühlte, erstarrte Glasrohr von dem Dorn abgezogen.

**Patentansprüche**

1. Verbindung zum abgedichteten Ineinanderfügen von Enden zylindrischer Glasrohre, bei der am Ende des einen Glasrohres (1) ein das Ende des anderen Glasrohres (2) aufnehmendes, von einer Verengung (6, 13) begrenztes rotationssymmetrisch ausgebildetes muffenförmiges Aufnahmeteil (5, 14) ausgebildet ist und bei der die auf den Aufnahmeteil (5, 14) des aufnehmenden Glasrohres (1) entfallende Mantelfläche des aufgenommenen Glasrohres (2) einen rundumlaufenden, axial beidseitig begrenzten Sitz (9) aufweist, in dem eine sich an die Innenfläche des Rohrendes des aufnehmenden Glasrohres (1) anpassende, aus einem elastischen Material, vorzugsweise aus Teflon, hergestellte Dichtung (3) angeordnet ist, so daß zwischen der Innenfläche der Dichtung (3) und der Fläche des Sitzes (9) sowie der Außenfläche der Dichtung (3) und der Innenfläche des aufnehmenden Glasrohres (1) ein vakuumdichter Stoß ausgebildet ist, bei der ferner auf dem aufgenommenen Glasrohr (2) ein aus gegenüber Chemikalien beständigem Stoff hergestellter zusätzlicher Ring (4) sitzt, der vorzugsweise aus Silikongummi oder Halogen-Butyl-Kautschuk besteht, der sich an die Innenfläche des ersten Rohrendes anpaßt und bei der die Fläche des Sitzes (9) sowie die Innenfläche des Aufnahmeteils des aufnehmenden Glasrohres ungeschliffen ist, dadurch gekennzeichnet, daß sowohl das Aufnahmeteil (5, 14) des aufnehmenden Glasrohres (1) als auch das Ende des aufgenommenen Glasrohres (2) zylinderförmig sind, daß im eingefügten Zustand des Glasrohres (2) die Dichtung (3) mit ihrer dem aufnehmenden Glasrohr (1) zugewandten umlaufenden Außenkante an die Verengung (6, 13) stößt und daß der zusätzliche Ring (4) auf die zylindrische Außenfläche des aufgenommenen Glasrohres (2) aufgeschoben ist und die Enden der beiden Glasrohre (1, 2) haltend an der Endfläche des aufnehmenden Rohres (1) stopfenartig anliegt.

2. Verbindung nach Anspruch 1, dadurch gekennzeichnet, daß der ringförmige Sitz (9) von zwei rund um die Außenfläche des aufgenommenen Glasrohres (2) laufenden ringförmigen Wülsten (11) begrenzt und daß der Außendurchmesser des aufgenommenen Rohres (2) im Bereich des Sitzes (9) gleich dem des restlichen Rohres (2) ist.

3. Verbindung nach Anspruch 1 oder 2, dadurch gekennzeichnet, daß der Innendurchmesser des aufgenommenen Glasrohres (2) im Bereich der Sitzfläche (9) gleich dem Innendurchmesser des übrigen Glasrohres (2) ist.

4. Verbindung nach Anspruch 1 bis 3, dadurch gekennzeichnet, daß in der Abdichtung (3) eine oder mehrere an der Außenfläche rund umlaufende Vertiefungen (12) ausgebildet sind.

5. Verbindung nach einem der Ansprüche 1 bis 4, dadurch gekennzeichnet, daß der Haltering (4) eine Schulter (10) aufweist, die auf dem Ende des aufnehmenden Glasrohres (1) liegt, während der unter der Schulter (10) liegende Teil in das aufnehmende Glasrohr (1) hineinragt.

**Claims**

1. A connection for the sealed fitting together of the ends of cylindrical glass tubes, wherein at the end of one glass tube (1) there is formed a socket-like accommodating part (5, 14) of rotationally symmetrical design, delimited by a reduced portion (6, 13) and receiving the end of the other glass tube (2), and wherein the circumferential surface of the accommodated glass tube (2) associated with the accommodating part (5, 14) of the accommodating glass tube (1) has a circumferentially extending seating (9) delimited axially on either side, in which seating is arranged a seal (3) made of an elastic material, preferably of Teflon, which conforms to the inner surface of the tube end of the accommodating glass tube (1), so that a vacuum-tight joint is formed between the inner surface of the seal (3) and the surface of the seating (9) and between also the outer surface of the seal (3) and the inner surface of the accommodating glass tube (1), wherein also on the accommodated glass tube (2) there is seated an additional ring (4) made of material resistant to chemicals, which ring preferably consists of silicon rubber or halogen-butyl-caoutchouc and which conforms to the inner surface of the first tube end, and wherein the surface of the seating (9) and also the inner surface of the accommodating part of the accommodating glass tube is not ground, characterised in that both the accommodating part (5, 14) of the accommodating glass tube (1) and the end of the accommodating glass tube (2) are cylindrical, that in the inserted condition of the glass tube (2) the seal (3) abuts against the reduced portion (6, 13) with its circumferential outer edge facing the accommodating glass tube (1), and in that the additional ring (4) is fitted on to the cylindrical outer surface of the accommodated glass tube (2) to retain the ends of the two glass tubes (1, 2) and abuts against the end surface of the the accommodating glass tube (1) in the manner of a plug.

2. A connection according to claim 1, characterised in that the annular seating (9) is delimited by two annular beads (11) extending around the outer surface of the accommodated glass tube (2), and that the outer diameter of the accommodated tube (2) in the region of the seating (9) is the same as the rest of the tube (2).

3. A connection according to claim 1 or 2, characterised in that the internal diameter of the accommodated glass tube (2) in the region of the seating surface (9) is the same as the internal diameter of the rest of the glass tube (2).

4. A connection according to claims 1 to 3, characterised in that one or more recesses (12) extending around the outer surface are formed in the seal (3).

5. A connection according to one of claims 1 to 4, characterised in that the retaining ring (4) has a shoulder (10) which rests on the end of the accommodating glass tube (1), while the part situated below the shoulder (10) projects into the accommodating glass tube (1).

## Revendications

1. Liaison pur l'assemblage étanche des extrémités cylindriques de tubes cylindriques en varre, dans laquelle une partie (5, 14) formant logement, constitueé par un manchon à symétrie de révolution délimitée à partir d'un étranglement (6, 13) réalisée à l'extrémité d'un tube en verre (1) recevant l'extrémité d'un autre tube en verre (2) et dans lequel la surface externe de la paroi du tube en verre (2) entrant dans la partie formant logement (5, 14) du tube en verre récepteur (1) présente une gorge circulaire (9) limitée axialement dans laquelle est monté un joint (3) réalisé en matière élastique, de préférence en Téflon, s'adaptant à la surface intérieure de l'extrémité du tube récepteur (1) de sorte qu'un joint étanche au vide est formé entre la surface intérieure du joint (3) et la surface de la gorge (9) ainsi qu'entre la surface extérieure du joint (3) et la surface intérieure du tube en verre récepteur (1), joint dans lequel est placée une bague (4) supplémentaire fabriquée en matière résistant aux produits chimiques sur le tube en verre (2) contenu, bague constituée de préférence en caoutchouc siliconé ou en halogénure de butyle, qui s'adapte à la surface intérieure de la première extrémité du tube, la surface de la gorge (9) et la surface intérieure de la partie formant logement du tube en verre récepteur n'étant pas meulées, caractérisé en ce qu'aussi bien la partie formant logement (5, 14) du tube en verre (1) récepteur que l'extrémité du tube contenue en verre (2) présentent une forme cylindrique, en ce que lorsque le tube en verre (2) est introduit, le joint (3) bute par son bord extérieur circulaire et orienté vers le tube en verre (1) récepteur contre l'étranglement (6, 13) et en ce que la bague supplémentaire (4) vient en contact avec la surface d'extrémité du tube réception (1) comme un bouchon et maintient les extrémités des deux tubes (1) et (2).

2. Liaison selon la revendication 1, caractérisée en ce que la gorge annulaire (9) est délimitée par deux bourrelets (11) en forme d'anneaux circulaires autour de la surface extérieure du tube en verre (2) contenu et en ce que le diamètre extérieur du tube contenu (2) est égal à celui du reste du tuyau (2) au niveau de la gorge (9).

3. Liaison selon la revendication 1 ou 2, caractérisée en ce que le diamètre intérieur du tube en verre (2) contenu est égal au diamètre intérieur du tube en verre restant (2) au niveau de la surface de la gorge (9).

4. Liaison selon les revendications 1 à 3, caractérisée en ce qu'une ou plusieurs rainures circulaires (12) sont réalisées autour de la surface extérieure dans le joint (3).

5. Liaison selon l'une des revendications 1 à 4, caractérisée en ce que la bague de maintien (4) présente un épaulement (10), qui repose à l'extrémité du tube en verre (1) récepteur, la partie se trouvant en-dessous de l'épaulement (10) formant une saillie dans le tube en verre (1) récepteur.

**Fig. 1**

**Fig. 2**

0 018 017

Fig. 3.

Fig. 4.

Fig. 5.